(19) Europäisches Patentamt
European Patent Office
Office européen des brevets

(11) **EP 3 453 000 B1**

(12) **EUROPÄISCHE PATENTSCHRIFT**

(45) Veröffentlichungstag und Bekanntmachung des Hinweises auf die Patenterteilung:
**06.05.2020 Patentblatt 2020/19**

(21) Anmeldenummer: **17712959.0**

(22) Anmeldetag: **22.03.2017**

(51) Int Cl.:
***G08B 17/12*** *(2006.01)*

(86) Internationale Anmeldenummer:
**PCT/EP2017/056757**

(87) Internationale Veröffentlichungsnummer:
**WO 2017/190881 (09.11.2017 Gazette 2017/45)**

(54) **RAUCHDETEKTIONSVORRICHTUNG, VERFAHREN ZUR DETEKTION VON RAUCH EINES BRANDES SOWIE COMPUTERPROGRAMM**

SMOKE DETECTION DEVICE, METHOD FOR DETECTING SMOKE FROM A FIRE, AND COMPUTER PROGRAM

DISPOSITIF DE DÉTECTION DE FUMÉE, PROCÉDÉ DE DÉTECTION DE LA FUMÉE D'UN INCENDIE ET PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2016 DE 102016207705**

(43) Veröffentlichungstag der Anmeldung:
**13.03.2019 Patentblatt 2019/11**

(73) Patentinhaber: **Robert Bosch GmbH**
**70442 Stuttgart (DE)**

(72) Erfinder: **STADLER, Anton**
**83233 Bernau (DE)**

(56) Entgegenhaltungen:
**WO-A1-2008/037293      WO-A2-01/57819**
**DE-A1- 19 840 873      DE-A1-102014 219 829**
**US-A1- 2013 279 803**

**EP 3 453 000 B1**

**Beschreibung**

Stand der Technik

Die Erfindung betrifft eine Rauchdetektionsvorrichtung zur Detektion von Rauch eines Brandes in einem Überwachungsbereich, mit einer Kameraschnittstelle zur Übernahme einer Bildfolge mit zeitlich aufeinanderfolgenden Einzelbildern von einer Überwachungskamera, wobei die Einzelbilder den Überwachungsbereich zeigen, mit einer Auswerteeinrichtung zur Bestimmung mindestens eines sich bewegenden Objektes im Überwachungsbereich, wobei die Auswerteinrichtung ausgebildet ist, eine Bewegung des mindestens einen sich bewegenden Objektes aus mindestens zwei Einzelbildern der Bildfolge zu bestimmen. Die Erfindung betrifft ferner ein Verfahren zur Detektion von Rauch sowie ein Computerprogramm.

Neben automatisierten Brandmeldern, welche über Temperaturmessung, Streulichtmessung und andere Messmethoden Merkmale eines Brandes detektieren und darauf basierend einen Alarm ausgeben, sind mittlerweile eine Vielzahl von videobasierten Brandmeldern bekannt geworden, welche mittels Bildverarbeitung einen Brand über aussagekräftige Brandmerkmale wie zum Beispiel optische Emissionen oder Rauchemissionen erkennen und melden können.

In der Druckschrift WO 2008/037 293 werden ein Verfahren und eine Vorrichtung zur Detektion von Rauch mit einer Videokamera vorgeschlagen. Bei dem Verfahren wird mindestens ein Videobild einer ein Gebiet überwachenden Videokamera aufgenommen. Nachfolgend wird mindestens ein sich bewegender Bereich des mindestens einen Videobildes durch Bestimmung der Richtung und der Größe des sich bewegenden Bereiches auf das wahrscheinliche Vorliegen von Rauch überprüft. Bei einem positiven Prüfergebnis wird zumindest ein Teil des mindestens einen sich bewegenden Bereichs abhängig von mindestens einer für Rauch charakteristischen Information hinsichtlich des Vorliegens von Rauch ausgewertet.

Die Druckschrift DE 10 2014 219 829 A1 beschreibt eine Rauchdetektionsvorrichtung zur Detektion von Rauch eines Brandes in einem Überwachungsbereich. Eine Überwachungskamera nimmt mindesten zwei aufeinanderfolgende Einzelbilder auf. Ein Differenzmodul eliminiert den Szenenhintergrund in den Einzelbildern. Ein Auswertemodul bestimmt die Bewegung des Rauches auf Basis der hintergrundbereinigten Einzelbilder.

In der Offenlegungsschrift DE 198 40 873 A1 ist eine Vorrichtung zur automatischen Waldbranderkennung beschrieben. Mittels einer optischen Aufnahmeeinrichtung wird ein Referenzbild einer Szene aufgenommen. Im Referenzbild wird der Horizont detektiert und der Bereich unter dem Horizont normiert. Durch nichtlineare Filterung werden mögliche Bewegungen im aufgenommen Referenzbild unterdrückt. Das Referenzbild wird mit einem weiteren von der Aufnahmeeinrichtung aufgenommen Bild verglichen. Auf Basis des Vergleichs und dem Anwenden eines Cluster-Algorithmus kann ein Waldbrand detektiert werden.

Die Druckschrift US 2013/0279803 A1 beschreibt eine auf einer Mehrzahl an Überwachungsbildern basierende computerimplementierte Methode zur Detektion von Rauch. Die Mehrzahl an Bildern werden in "Median filter Transform"-Domaindaten transformiert, wobei auf diese transformierten Domaindaten eine energiebasierte "L1"-Norm angewandt wird um Rauch zu detektieren. Mittels eines Markov-Modells kann die Turbulenz als Indikator für Rauch herangezogen werden.

In der Druckschrift WO 01/57819 A2, die den nächstkommenden Stand der Technik bildet, beschreibt eine Methode um mit einem Computer Rauch zu detektieren. Dabei werden von dem Computer digitalisierte Bilder einer zu überwachenden Region empfangen. In zwei digitalisierten Bildern werden Pixel verglichen und zusammen mit vorbestimmten Regeln wird daraus auf das Vorhandensein von Rauch geschlossen.

Offenbarung der Erfindung

Im Rahmen der Erfindung werden eine Rauchdetektionsvorrichtung mit den Merkmalen des Anspruchs 1 und ein Verfahren mit den Merkmalen des Anspruchs 8 sowie ein Computerprogramm mit den Merkmalen des Anspruchs 9 vorgeschlagen. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Rauchdetektionsvorrichtung zur Detektion von Rauch eines Brandes in einem Überwachungsbereich vorgeschlagen. Der Rauch wird durch Rauchemissionen, insbesondere von Verbrennungsprodukten des Brandes, gebildet. Der Überwachungsbereich kann als ein geschlossener Überwachungsbereich, wie zum Beispiel ein Raum und/oder eine Halle ausgebildet sein. Alternativ und/oder ergänzend kann der Überwachungsbereich auch ein offener Überwachungsbereich sein, wie zum Beispiel ein Freilandbereich. Optional ergänzend ist die Rauchdetektionsvorrichtung ausgebildet, einen Brandalarm bei detektiertem Rauch auszugeben und ist so beispielsweise als ein Brandmelder ausgebildet.

Die Rauchdetektionsvorrichtung weist eine Kameraschnittstelle auf, welche zur Übernahme einer Bildfolge mit mindestens zwei zeitlich aufeinanderfolgenden Einzelbildern ausgebildet ist. Die Kameraschnittstelle kann kabelgebunden und oder kabellos ausgebildet sein. Insbesondere ist die Kameraschnittstelle als eine Netzwerkschnittstelle ausgebildet.

Die Bildfolge wird von einer Kamera bereitgestellt. Optional umfasst die Rauchdetektionsvorrichtung die Kamera, wobei die Kamera beispielsweise als CCD- oder CMOS Kamera ausgebildet ist. Die Kamera nimmt vorzugsweise Bilder im sichtbaren Bereich auf. Alternativ und/oder ergänzend ist die Kamera ausgebildet, Bilder im NIR-, IR- oder UV-Bereich aufzunehmen. Die Kamera ist insbesondere auf den Überwachungsbereich zur Aufnahme und Bereitstellung der Bildfolge gerichtet. Die Einzelbilder der Kamera zeigen vorzugsweise einen gleichen Abschnitt des Überwachungsbereichs. Die Einzelbilder der Bilderserie sind vorzugsweise durch einen konstanten Zeitabstand dt beabstandet. Der Zeitabstand dt ist vorzugsweise zwischen 20 Millisekunden und 300 Millisekunden. Beispielsweise ist die Kamera als eine Kamera mit einer Bildfrequenz 25, 30, 50 oder 60 ausgebildet.

Die Rauchdetektionsvorrichtung umfasst eine Auswerteeinrichtung zur Bestimmung mindestens eines bewegenden Objektes im Überwachungsbereich. Die Auswerteeinrichtung ist insbesondere datentechnisch mit der Kameraschnittstelle verbunden, um von dieser die Einzelbilder der Bildfolge zu erhalten. Die Auswerteeinrichtung ist beispielsweise als ein Computer, Mikrochip oder Prozessor ausgebildet.

Das mindestens eine sich bewegende Objekt ist insbesondere Rauch oder ein Nichtrauchobjekt. Als bewegende Nichtrauchobjekte werden vorzugsweise Objekte verstanden, die als bewegende starre Körper ausgebildet sind, wie zum Beispiel Förderbänder, Tore oder langsam bewegende Fahrzeuge. Die Auswerteeinheit ist ausgebildet, die Bewegung des mindestens einen bewegenden Objektes aus mindestens zwei Einzelbildern der Bildfolge zu bestimmen. Als Bewegung wird vorzugsweise eine Veränderung einer Position des Objektes und/oder eines Abschnittes des Objektes in einem ersten Einzelbild zu einem zweiten Einzelbild verstanden, wobei die Veränderung der Position in Pixel und/oder einer Längeneinheit wie zum Beispiel Meter ausdrückbar ist. Die Bewegung des bewegenden Objektes wird beispielsweise durch die Geschwindigkeit der Positionsänderung des Objektes und/oder eines Abschnittes des Objektes näher charakterisiert, die einer Änderung in Pixel pro Bildpaar und/oder cm/Bildpaar entspricht. Alternativ und/oder ergänzend kann die Bewegung, bei bekannter Zeitdifferenz zwischen den zwei Einzelbildern, zum Beispiel als Pixel/s und/oder cm/s charakterisiert werden. Die Zeitdifferenz zwischen zwei Einzelbildern ist vorzugsweise so gewählt, dass für Rauch ein Unterschied von mehr als 0,5 Pixel pro Bildpaar erreicht wird. Insbesondere ist die Bewegung als eine Bewegung des Objektes und/oder eines Abschnittes des Objektes in Aufwärtsrichtung und/oder die gemittelte Bewegungsrichtung in Aufwärtsrichtung gerichtet, wobei als Aufwärtsrichtung die Richtung von Boden zu Horizont verstanden wird.

Die Rauchdetektionsvorrichtung umfasst eine Filtereinrichtung zur Unterscheidung des bewegenden Objektes in Rauch oder Nichtrauchobjekt auf Basis der Bewegung des bewegenden Objektes. Die Filtereinrichtung ist vorzugsweise Teil der Auswerteeinrichtung. Alternativ und/oder ergänzend kann die Filtereinrichtung als separater Chip, Computer oder Prozessor ausgebildet sein. Insbesondere ist die Filtereinrichtung mit der Kameraschnittstelle und/oder Auswerteeinrichtung datentechnisch verbunden. Die Unterscheidung in Rauch und Nichtrauchobjekt, insbesondere starrer Körper, erfolgt beispielsweise auf Basis der Auswertung von Turbulenzen, Geschwindigkeit und/oder Bewegungsrichtung des bewegenden Objektes.

Es ist dabei eine Überlegung der Erfindung, dass durch die Verwendung der Filtereinrichtung eine besonders aussagekräftige Auswertung von Rauch in einem Überwachungsbereich geschaffen wird, wobei Fehlalarme durch Detektion von Nichtrauchobjekten als Rauch reduziert werden können. Nachdem Rauch im Vergleich zu Nichtrauchobjekten üblicherweise ein anderes Bewegungsverhalten und höhere Turbulenzen aufweist, kann eine Filtereinrichtung auf Basis einer Analyse der Bewegung von Objekten im Überwachungsbereich, eine Unterscheidung in Rauch und Nichtrauchobjekte treffen.

Erfindungsgemäß umfasst die Auswerteeinrichtung eine Geschwindigkeitsmesseinheit zum Bestimmen einer Geschwindigkeit des mittleren optischen Flusses $v_F$ des bewegenden Objektes und zum Bestimmen einer Geschwindigkeit eines Konturbereichs des bewegenden Objektes. Als optischer Fluss wird insbesondere die Veränderung von Grauwerten zwischen zwei Einzelbildern der Bildfolge auf Grund von Bewegung verstanden. Vorzugsweise ist der optische Fluss eines Bildpaares ($G_k$, $G_{k+1}$) das Vektorfeld

$$f_k(x, y) = \left( u_k(x, y); v_k(x, y) \right)^T$$

mit $G(x + u_k(x,y), y + v_k(x,y), t_k + \Delta t_{const}) = G(x,y,t_k)$, wobei $G_k$ Grauwerte im Bild zum Zeitpunkt $t_k$, $u_k(x,y)$ ein Verschiebungsvektor in der horizontalen und $v_k(x,y)$ in vertikalen Richtung an der Position mit den Koordinaten (x,y) sind.

Der mittlere optische Fluss ist insbesondere der über das gesamte bewegende Objekt gemittelte optische Fluss und/oder resultierende optische Fluss. Die Geschwindigkeit des mittleren Flusses $v_F$ des bewegenden Objektes ist insbesondere das Vektorfeld der in die Bildebene projizierten Geschwindigkeit von Punkten des bewegenden Objektes im Bezugssystem der Abbildungsoptik.

Der Konturbereich ist vorzugsweise ein ausgewählter Bereich des bewegenden Objektes in der Bildfolge. Der Konturbereich kann ein flächiger Abschnitt des bewegenden Objektes sein, wobei der flächige Abschnitt vorzugsweise eine Fläche von mehr als 4 Pixel umfasst. Alternativ kann der Konturbereich ein Linienelement der Kontur des bewegenden Objektes sein, wobei das Linienelement vorzugsweise mehr als 2 Pixel umfasst. Insbesondere kann der Konturbereich auch ein punktförmiger Abschnitt des bewegenden Objektes sein. Die Geschwindigkeit des Konturbereiches $v_G$ bildet vorzugsweise die Positionsänderung des Konturbereiches von einem ersten Einzelbild zu einem zweiten Einzelbild pro Bildpaar und/oder pro Zeit zwischen den Einzelbildern des Bildpaares. Die Einheit der Geschwindigkeit $v_F$ des mittleren optischen Flusses und $v_G$ des Konturbereiches wird insbesondere in Pixeländerung pro Bildpaar und/oder Zeit gemessen, alternativ und/oder ergänzend werden die Geschwindigkeiten in cm/s gemessen.

Erfindungsgemäß umfasst die Filtereinrichtung eine Vergleichseinheit zum Detektieren eines bewegenden Objektes als Rauch, wenn die Geschwindigkeit $v_G$ des Konturbereichs kleiner ist als die Geschwindigkeit $v_F$ des mittleren optischen Flusses. Die Vergleichseinheit ist ferner ausgebildet, das bewegende Objekt als Nichtrauchobjekt zu detektieren wenn die Geschwindigkeit $v_F$ des mittleren optischen Flusses kleiner oder gleich der Geschwindigkeit $v_G$ des Konturbereiches ist. Der Ausgestaltung liegt die Überlegung zu Grunde, dass Rauch bei einem Brand ständig produziert wird und sich ein festgehaltener beobachteter Rauchbereich, insbesondere ein nahe am Brand angeordneter Rauchbereich, nicht verändert, da immer Rauch nachgebildet wird. Bei einem Nichtrauchobjekt, wie zum Beispiel einem Fahrzeug, ist die Geschwindigkeit $v_G$ eines Konturbereiches größer als die Geschwindigkeit $v_F$ des mittleren optischen Flusses.

In einer möglichen Ausgestaltung umfasst die Vergleichseinheit einen ersten Sicherheitsfaktor $b_1$ und einen zweiten Sicherheitsfaktor $b_2$, wobei für die Sicherheitsfaktoren gilt $0 < b_1 \leq b_2 < 1$. Die Vergleichseinheit ist vorzugsweise so ausgebildet, mindestens ein bewegendes Objekt als Rauch zu detektieren, wenn die Geschwindigkeit $v_G$ des Konturbereiches kleiner ist als der erste Sicherheitsfaktor $b_1$ mal der Geschwindigkeit $v_F$ des mittleren optischen Flusses. Insbesondere ist die Vergleichseinheit ausgebildet, ein bewegendes Objekt als Nichtrauchobjekt zu detektieren, wenn die Geschwindigkeit $v_G$ des Konturbereiches größer oder gleich der Geschwindigkeit $v_F$ des mittleren optischen Flusses mal dem Sicherheitsfaktor $b_2$ ist. Vorzugsweise detektiert die Vergleichseinheit für $b_1 \neq b_2$ eine Voralarmstufe im Fall, dass die Geschwindigkeit $v_G$ des Konturbereichs größer oder gleich der Geschwindigkeit $v_F$ des mittleren optischen Flusses mal erstem Sicherheitsfaktor $b_1$ ist und die Geschwindigkeit $v_G$ des Konturbereiches kleiner als die Geschwindigkeit $v_F$ des mittleren optischen Flusses mal zweitem Sicherheitsfaktor $b_2$ zwei ist.

Besonders bevorzugt weist der mittlere optische Fluss des bewegenden Objektes eine gemittelte Flussrichtung auf. Insbesondere ist die gemittelte Flussrichtung der Vektor, der aus der Addition aller optischen Flussvektoren des bewegenden Objekts resultiert. Im Speziellen entspricht die Richtung des Vektors der gemittelten Flussrichtung der Bewegungsrichtung des Schwerpunktes des bewegenden Objekts. Der Konturbereich ist vorzugsweise an der, der gemittelten Flussrichtung entgegenliegenden Objektseite des bewegenden Objekts angeordnet. Insbesondere ist der Konturbereich Teil des Umrisses des bewegenden Objektes. Zum Beispiel ist der Konturbereich für einen Brand mit Windrichtung von links, der Teil der schräg nach rechts aufsteigenden Rauchsäule, der unten links angeordnet ist.

In einer weiteren möglichen Ausgestaltung weist der Überwachungsbereich einen Boden auf. Der Boden kann beispielsweise der Boden einer zu überwachenden Halle oder eines zu überwachenden Hauses sein. Insbesondere bildet die, in den Einzelbildern dem Boden gegenüberliegende Seite, den Horizont, wobei der Horizont beispielsweise die Decke der Halle oder des Raumes sein kann. In einer möglichen Ausgestaltung ist der Konturbereich auf der Seite des bewegenden Objektes angeordnet, welche nahe am Boden angeordnet ist. Der Ausgestaltung liegt die Überlegung zu Grunde, dass Rauch vom Boden zum Horizont aufsteigt und Rauch am Boden ständig nachproduziert wird, so dass die Geschwindigkeit eines Konturbereiches nahe am Boden sehr klein und/oder Null ist. Für ein solches bewegendes Objekt wäre der mittlere optische Fluss ungleich Null, da sich der Rauch nach oben ausbreitet. Die Geschwindigkeit $v_F$ des mittleren optischen Flusses wäre somit auch größer als die Geschwindigkeit $v_G$ des Konturbereiches.

In einer besonders bevorzugten Ausgestaltung umfasst die Filtereinrichtung eine Turbulenzanalyseeinheit zur Unterscheidung des bewegenden Objektes in Rauch und Nichtrauchobjekt auf Basis von Turbulenzen im bewegenden Objekt. Als Turbulenzen werden insbesondere Verwirbelungen verstanden, die sich beispielsweise als scheinbar zeitlich und räumlich zufällige Variationen in den Einzelbildern zeigen. Die Turbulenzanalyseeinheit ist insbesondere ausgebildet, Turbulenzen durch Vergleich des bewegenden Objektes in mindestens zwei Einzelbildern der Bildfolge zu bestimmen. Insbesondere detektiert die Turbulenzanalyseeinheit das bewegende Objekt als Rauch, bei Vorhandensein von Turbulenzen und/oder als Nichtrauchobjekt, bei fehlenden Turbulenzen. Der Ausgestaltung liegt die Überlegung zu Grunde, dass Rauch eine natürliche Turbulenz aufweist und die Bewegung starrer Körper kaum bis keine Turbulenzen aufweist, so dass auf Basis der Turbulenzen ein Unterscheiden von Rauch und Nichtrauch möglich ist.

In einer weiteren Ausgestaltung der Erfindung ist die Auswerteeinrichtung ausgebildet, eine erste Korrespondenz $R_1$ des bewegten Objektes als ein Vergleichs- und/oder Übereinstimmungsmaß von mindestens einem ersten Bildbereich des bewegenden Objektes in einem ersten und einem zweiten Einzelbild der Bildfolge zu bestimmen, wobei das erste und das zweite Einzelbild in einem zeitlichen Abstand dt aufgenommen wurden. Beispielsweise entspricht eine Korrespondenz einem Wiederfinden eines Featurepunktes und/oder eines Bildmerkmales eines ersten Bildes in einem zweiten Bild der Bildfolge. Ferner ist in dieser Ausgestaltung die Auswerteeinrichtung ausgebildet, mindestens eine zweite Korrespondenz $R_2$ als ein Vergleichs- und/oder Übereinstimmungsmaß des mindestens ersten Bildbereiches in dem ersten und einem dritten Einzelbild der Bildfolge zu bestimmen, wobei das erste und das dritte Einzelbild in einem zeitlichen Abstand von n*dt aufgenommen wurden, wobei n eine positive Zahl ist. Vorzugsweise ist n eine Zahl zwischen zwei und fünf.

Vorzugsweise ist die Auswerteeinrichtung ausgebildet, den Bildbereich des bewegenden Objektes im ersten Einzelbild mit dem Bildbereich des bewegenden Objektes im zweiten Einzelbild zu vergleichen, wobei die Auswerteeinrichtung jeden Abschnitt des Bildbereiches in den zwei Bildern abgleicht und wie folgt als Übereinstimmung $r_1$ bewertet:

$$r_1 = \begin{cases} 1, & \text{Übereinstimmung bei } dt \\ 0, & \text{Keine Übereinstimmung bei } dt \end{cases}$$

Die Korrespondenz $R_1$ wird insbesondere als die Übereinstimmung innerhalb der gesamten region of interest wie folgt bestimmt, wobei beispielsweise das gesamte bewegende Objekt die region of interest bildet:

$$R_1 = \sum_{y,x \in ROI} r_1(x,y)$$

Die Auswerteeinrichtung ist vorzugsweise ferner dazu ausgebildet, eine Übereinstimmung $r_2$ im ersten Bild und dritten Bild analog zu $r_1$ wie folgt zu bestimmen:

$$r_2 = \begin{cases} 1, & \text{Übereinstimmung bei } n*dT \\ 0, & \text{Keine Übereinstimmung bei } n*dT \end{cases}$$

Die zweite Korrespondenz $R_2$ wird insbesondere bestimmt als:

$$R_2 = \sum_{y,x \in ROI} r_2(x,y)$$

In einer möglichen Ausgestaltung umfasst die Turbulenzanalyseeinheit zwei Faktoren $c_1$ und $c_2$, wobei $0 < c_1 \leq c_2 < 1$ gilt. Die Turbulenzanalyseeinheit ist insbesondere ausgebildet, ein bewegendes Objekt aus Rauch zu detektieren, wenn $R_2 < c_1{*}R_1$ und/oder ein bewegendes Objekt als Nichtrauchobjekt zu detektieren, wenn $R_2 > c_2{*}R_1$. Die Turbulenzanalyseeinheit kann ausgebildet sein, das bewegende Objekt als Voralarm zu bewerten, wenn $c_1{*}R_1 \geq R_2 < c_2{*}R_1$.

Bei einer besonders bevorzugten Ausgestaltung der Erfindung ist die Auswerteeinrichtung ausgebildet, die erste Korrespondenz $R_1$ und die zweite Korrespondenz $R_2$ mit einer region of interest auf relative Korrespondenzen $\tilde{R}_1$ und $\tilde{R}_2$ zu normieren. Die region of interest ist zum Bespiel der gesamte Bildbereich des bewegenden Objektes oder ein beliebig festgelegter Bereich in den Einzelbildern. Die region of interest besitzt eine Fläche, die beispielsweise in Pixel messbar ist, und die Größe size(ROI) besitzt. Die Normierung erfolgt vorzugsweise wie folgt:

$$\tilde{R}_1 = \frac{R_1}{size(ROI)}$$

$$\tilde{R}_2 = \frac{R_2}{size(ROI)}$$

In dieser Ausgestaltung umfasst die Turbulenzanalyseeinheit zwei Sicherheitsfaktoren $d_1$ und $d_2$, wobei $0<d_1 \leq d_2<1$. Die Turbulenzanalyseeinheit ist insbesondere ausgebildet ein bewegendes Objekt als Rauch zu detektieren, wenn $\tilde{R}_2 < d_1 * \tilde{R}_1$ und/oder ein bewegendes Objekt als Nichtrauchobjekt zu detektieren, wenn $\tilde{R}_2 \geq d_1 * \tilde{R}_1$. Der Bereich $d_1 * \tilde{R}_1 \leq \tilde{R}_2 < d_2\tilde{R}_1$ wird von der Turbulenzanalyseeinheit vorzugsweise als Voralarm gewertet. Im Speziellen kann $d_1{=}d_2{=}d$ gewählt sein, wobei d beispielsweise größer als 0,4 und kleiner als 0,6 ist.

Ein weiterer Aspekt der Erfindung betrifft ein Verfahren mit einer Rauchdetektionsvorrichtung zur Detektion von Rauch in einem Überwachungsbereich, wobei eine Auswerteeinrichtung auf Basis mindestens zweier Einzelbilder einer Bilderserie eines Überwachungsbereiches die Bewegung eines bewegenden Objektes im Überwachungsbereich bestimmt und eine Filtereinrichtung das bewegende Objekt in Rauch und Nichtrauchobjekt auf Basis der Bewegung des bewegenden Objektes bestimmt.

Ein weiterer Gegenstand der Erfindung bildet ein Computerprogramm mit Programmcodemitteln zur Durchführung des zuvor beschriebenen Verfahrens, vorzugsweise auf einer Rauchdetektionsvorrichtung oder auf einer Datenverarbeitungsanlage.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:

Figur 1 eine schematische Blockdarstellung einer Rauchdetektionsvorrichtung als ein Ausführungsbeispiel der Erfindung;

Figur 2a und Figur 2b jeweils eine Illustration eines Einzelbildes eines Überwachungsbereiches;

Figur 3a und Figur 3b eine Illustration eines Brandes mit Rauch.

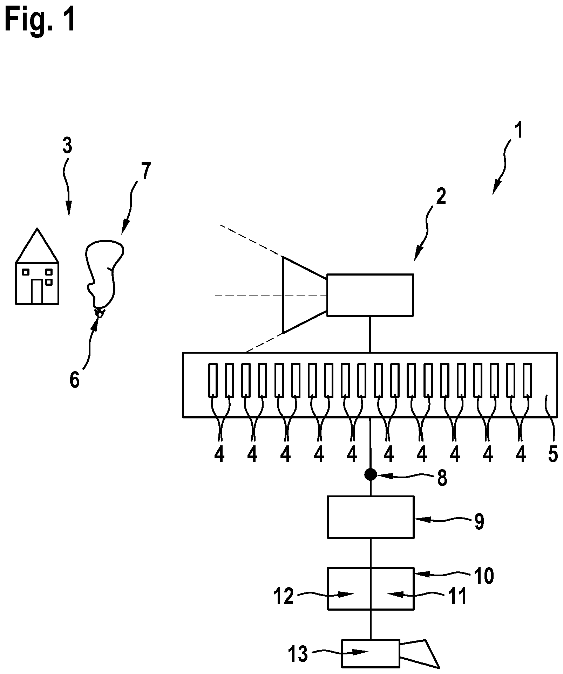

In Figur 1 ist in einer stark schematisierten Darstellung eine Rauchdetektionsvorrichtung 1 als ein erstes Ausführungsbeispiel der Erfindung dargestellt. Die Rauchdetektionsvorrichtung 1 umfasst optional eine Überwachungskamera 2. Die Überwachungskamera 2 kann als eine Farb- und/oder Schwarzweißkamera ausgeführt sein. Die Überwachungskamera 2 ist ausgebildet von einem Überwachungsbereich 3 mehrere Einzelbilder 4 aufzunehmen, wobei die mehreren Einzelbilder 4 eine Bildfolge 5 bilden. Der Überwachungsbereich 3 weist in diesem Ausführungsbeispiel ein Haus auf, sowie einen Brand 6 und dem davon produzierten Rauch 7. Die Einzelbilder 4 der Bildfolge 5 zeigen den Überwachungsbereich 3 und wurden in einem zeitlichen Abstand dt aufgenommen.

Die Rauchdetektionsvorrichtung 1 umfasst eine Kameraschnittstelle 8, wobei die Kameraschnittstelle 8 mit der Überwachungskamera 2 datentechnisch verbunden ist. Die Überwachungskamera 2 ist ausgebildet, der Rauchdetektionsvorrichtung 1 über die Kameraschnittstelle 8 die Einzelbilder 4 der Bildfolge 5 als digitale Daten bereitzustellen.

Die Rauchdetektionsvorrichtung 1 umfasst eine Auswerteeinrichtung 9. Die Auswerteeinrichtung 9 ist in diesem Ausführungsbeispiel als embedded Computer ausgestaltet. Insbesondere ist die Auswerteeinrichtung als eine Bildauswerteeinheit ausgebildet und kann einen Framegrabber umfassen. Die Auswerteeinrichtung 9 bestimmt durch den Vergleich von mindestens zwei Einzelbildern 4 der Bildfolge 5, ob sich in dem Überwachungsbereich 3 ein sich bewegendes Objekt befindet. Beispielsweise vergleicht die Auswerteinheit 9 dazu, ob sich die Position eines Objektes in einem ersten Einzelbild 4 der Bildfolge in einem zweiten Einzelbild 4 der Bildfolge 5 verändert hat.

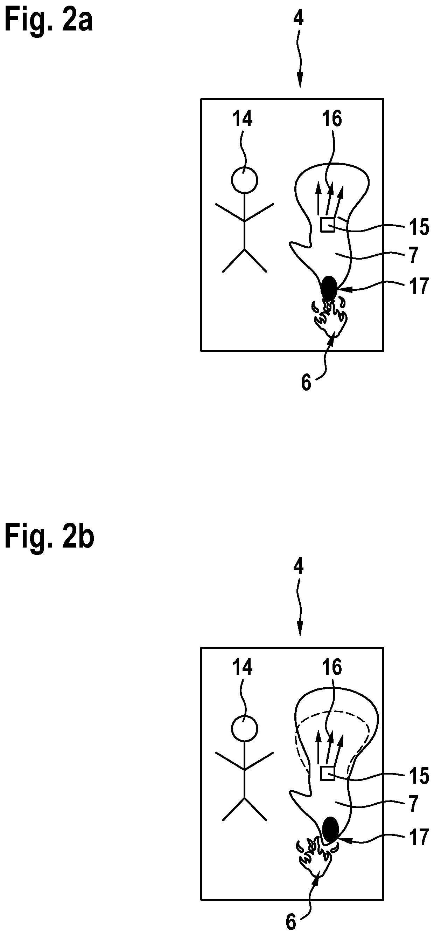

Ferner ist die Auswerteeinrichtung 9 ausgebildet, die Bewegung eines sich im Überwachungsbereich 3 bewegenden Objektes näher zu bestimmen. Beispielsweise umfasst die nähere Bestimmung der Bewegung des bewegenden Objektes die Bestimmung des Betrages und der Richtung der Geschwindigkeit des bewegenden Objektes, sowie die Bestimmung des mittleren optischen Flusses 16 (Figur 2a und 2b) des bewegenden Objektes und der Geschwindigkeit $v_F$ des mittleren optischen Flusses 16.

Die Rauchdetektionseinrichtung 1 umfasst eine Filtereinrichtung 10 zur Unterscheidung des bewegenden Objektes auf Basis der Bewegung des bewegenden Objektes, ob es sich bei dem bewegenden Objekt um Rauch 7 oder ein bewegendes Nichtrauchobjekt 14 (Figur 2a und 2b), wie zum Beispiel ein sich bewegendes Rolltor oder Menschen handelt. Die Filtereinrichtung 10 ist hier Teil der Auswerteeinrichtung 9, kann aber alternativ als ein separater Computer oder Chip ausgebildet sein. Die Filtereinrichtung 10 unterscheitet in diesem Ausführungsbeispiel das bewegende Objekt auf zwei Arten als Rauch 7 oder bewegendes Nichtrauchobjekt 14. Dazu umfasst die Filtereinrichtung 10 eine Vergleichseinheit 11 und eine Turbulenzanalyseeinheit 12.

Die Vergleichseinheit 11 ist ausgebildet, ein bewegendes Objekt in Rauch 7 oder bewegendes Nichtrauchobjekt 14 zu unterscheiden, indem es die Geschwindigkeit $v_G$, insbesondere den Betrag der Geschwindigkeit, eines Konturbereiches 17 (Figur 2a und 2b) mit der Geschwindigkeit $v_F$ des mittleren optischen Flusses 16 vergleicht. Als Geschwindigkeit $v_F$ des mittleren optischen Flusses 16 wird in diesem Ausführungsbeispiel die resultierende Geschwindigkeit des bewegenden Objektes angesehen. Alternativ und/oder ergänzend wird als Geschwindigkeit $v_F$ des mittleren optischen Flusses 16 als die Geschwindigkeit des Schwerpunktes des bewegenden Objektes angesehen. Als Konturbereich 17 kann jeder beliebige Abschnitt des bewegenden Objektes dienen, wobei der Konturbereich 17 in diesem Beispiel am unteren Bereich des bewegenden Objektes angeordnet ist. Die Geschwindigkeit $v_G$ des Konturbereichs 17 entspricht der Positionsänderung des Konturbereiches 17 von einem ersten Einzelbild 4 zu einem zweiten Einzelbild 4. Als Geschwindigkeit $v_F$ des mittleren optischen Flusses 16 und/oder der Geschwindigkeit $v_G$ des Konturbereichs 17 wird im Folgenden als deren Geschwindigkeitsbeträge angesehen. Beispielsweise werden die Geschwindigkeiten in Änderung der Position in Pixel und/oder Zentimeter pro Zeiteinheit oder pro Bildpaar bestimmt.

Die Vergleichseinheit 11 umfasst zwei Sicherheitsfaktoren $b_1$ und $b_2$, die zum Vergleichen der Geschwindigkeiten des Konturbereiches 17 und des mittleren optischen Flusses 16 dienen. Die Sicherheitsfaktoren ermöglichen ein sichereres Detektieren von Rauch 7 im Überwachungsbereich 3 und eine Reduktion von Fehlalarmen durch Detektion von bewegenden Nichtrauchobjekten 14 als Rauch 7. Die Vergleichseinheit 11 wertet ein sich bewegendes Objekt als Rauch 7, in dem Fall, dass die Geschwindigkeit $v_G$ des Konturbereiches 17 kleiner als das Produkt aus dem Sicherheitsfaktor $b_1$ und der Geschwindigkeit $v_F$ des mittleren optischen Flusses 16 ist. Ein sich bewegendes Objekt wird von der Vergleichseinheit 11 als bewegendes Nichtrauchobjekt 14 detektiert, wenn die Geschwindigkeit $v_G$ des Konturbereiches 17 größer oder gleich dem Produkt aus Sicherheitsfaktor $b_2$ und Geschwindigkeit $v_F$ des mittleren optischen Flusses ist.

Die Vergleichseinheit 11 nutzt den Effekt, dass ein Brand 6 kontinuierlich Rauch 7 produziert, so dass im Rauchabschnitt nahe dem Brand 6 keine optische Veränderung zu detektieren ist, da dort ständig Rauch 7 nachgeliefert wird. Eine Geschwindigkeit, die in diesem Bereich als eine Veränderung des ersten Einzelbildes zum zweiten Einzelbild gemessen wird, ist für Rauch daher sehr niedrig und/oder Null. Bei sich bewegenden Nichtrauchobjekten 14, die insbesondere von starren Körpern gebildet werden, bewegen sich alle Kanten und Konturen gleichförmig mit derselben Geschwindigkeit, eben der Schwerpunktsgeschwindigkeit, so weist der auch der Konturbereich 17 eine Geschwindigkeit größer Null auf.

Die Turbulenzanalyseeinheit 12 benutzt den Effekt, dass Rauch 7 eine starke natürliche Turbulenz aufweist, so dass sich die Merkmale innerhalb von Rauch 7 als bewegende Objekte von Einzelbild 4 zu Einzelbild 4 verändern. Zur Bestimmung der Turbulenz eines bewegenden Objektes im Überwachungsbereich, ist die Auswerteeinrichtung ausgebildet, eine erste Korrespondenz $R_1$ und eine zweite Korrespondenz $R_2$ des sich im Überwachungsbereich 3 bewegenden Objektes zu bestimmen. Dazu vergleicht die Auswerteeinrichtung 9 mindestens einen Bildbereich des sich bewegenden Objektes im einem ersten Einzelbild 4 mit dem entsprechenden Bildbereich im einem zweiten Einzelbild 4. Dazu ist die Auswerteeinrichtung 9 beispielsweise in der Lage, den Bildbereich des bewegenden Objektes im ersten Einzelbild 4 mithilfe der der Geschwindigkeit $v_F$ des mittleren optischen Flusses 16 in das zweite Einzelbild 4 zu extrapolieren und so die Position des entsprechenden Bildbereiches im zweiten und/oder dritten Einzelbild zu bestimmen, so dass die Bildbereiche im ersten und zweiten Einzelbild 4 vergleichbar sind. Der Vergleich des Bildbereiches in den Einzelbildern 4 erfolgt vorzugsweise pixelweise, wobei die Auswerteeinrichtung 9 einen im zweiten Einzelbild 4 wiedergefundenen Bildbereich als Übereinstimmung $r_1=1$ wertet und keine Übereinstimmung als $r_1 = 0$ wertet Die eigentliche Korrespondenz $R_1$ wird von der Auswerteeinrichtung 9 als die Summe aller Übereinstimmungen $r_1$ von ersten und zweiten Einzelbild 4 bestimmt.

Zusätzlich ist die Auswerteeinrichtung 9 ausgebildet die zweite Korrespondenz $R_2$ des sich bewegenden Objektes zu bestimmen. Dazu vergleicht die Auswerteeinrichtung 9 den mindestens einen Bildbereich im ersten Einzelbild 4 mit dem entsprechenden Bildbereich in einem dritten Einzelbild 4. Das dritte Einzelbild 4 ist in einem zeitlichen Abstand von 4*dt zum ersten Einzelbild 4 aufgenommen.

Alternativ kann der zeitliche Abstand zwischen dem ersten Einzelbild 4 und dem dritten Einzelbild 4 beliebig gewählt sein, wobei darauf zu achten ist, dass auch natürliche Veränderungen im Überwachungsbereich 3 bei zu großen zeitlichem Abstand als bewegendes Objekt detektiert werden können. Für einen zu klein gewählten zeitlichen Abstand, kann die Veränderung hingegen zu klein sein, so dass diese nicht als Bewegung erfasst werden kann.

Die Turbulenzanalyseeinheit 12 umfasst zwei Faktoren $c_1$ und $c_2$, die beide größer Null und kleiner Eins sind. Insbesondere ist in diesem Ausführungsbeispiel $c_1 = c_2 = 0,5$. Die Turbulenzanalyseeinheit 12 ist ausgebildet die Korrespondenz $R_1$ mit der Korrespondenz $R_2$ zu vergleichen. Ein bewegendes Objekt wird von der Turbulenzanalyseeinheit 12 als Rauch 7 detektiert, wenn die Korrespondenz $R_2$ kleiner als das Produkt von Sicherheitsfaktor $c_1$ und Korrespondenz $R_1$ ist. Ein bewegendes Objekt wird von der Turbulenzanalyseeinheit 12 als ein bewegendes Nichtrauchobjekt 14 detektiert, wenn das Produkt aus Sicherheitsfaktor $c_2$ und Korrespondenz $R_1$ kleiner oder gleich der Korrespondenz $R_1$ ist. Diese Unterscheidung in Rauch 7 und Nichtrauchobjekt 14 nutzt, dass die Korrespondenzen $R_1$ und $R_2$ bei bewegenden Nichtrauchobjekt 14 annähernd gleich sind, wohingegen bei Rauch 7 $R_2$ meist geringer als 0,6* $R_1$ ist.

In diesem Ausführungsbeispiel weist die Rauchdetektionsvorrichtung 1 eine Alarmierungseinheit 13 auf, die hier als Hupe ausgeführt ist. Die Hupe wird von der Filtereinrichtung 11 aktiviert, sofern sowohl die Turbulenzanalyseeinheit 12 als auch die Vergleichseinheit 11 das sich bewegende als Rauch 7 detektieren oder keine der beiden das bewegende Objekt als bewegendes Nichtrauchobjekt 14 detektiert.

Die Figuren 2a und 2b zeigen zwei beispielhafte Einzelbilder 4, die in einem zeitlichen Abstand dt aufgenommen wurden. Jedes der Einzelbilder 4 zeigt beispielhaft als bewegendes Nichtrauchobjekt 14 einen Menschen und einen Brand 6 mit Rauch 7. In beiden Bildern ist beispielhaft jeweils ein Ausschnitt innerhalb des Rauches 7 als Rauchausschnitt 15 ausgewählt und mit den Vektoren des optischen Flusses 16 dieses Rauchausschnittes versehen. Die Vektoren des optischen Flusses 16 zeigen an, in welche Richtung und wie schnell sich ein ausgewählter von Einzelbild zu Einzelbild verändern wird.

In Figur 2b ist in das Einzelbild 4 im Rauch 7 zusätzlich der Bereich des Rauches 7 im vorhergehenden Einzelbild 4 der Bildfolge 5 als gestrichelte Linie eingezeichnet. Wie durch den Vergleich der beiden Einzelbilder von Figur 2a und 2b erkenntlich ist, ändert sich der im unteren Bereich des Einzelbildes 4 befindliche Abschnitt des Rauches 7 kaum und/oder nicht, wohingegen sich der im oberen Bereich des Einzelbildes 4 befindliche Abschnitt des Rauches 7 weiterbewegt und somit ändert. Die Auswerteeinrichtung 9 kann durch den Vergleich der Weiterbewegung des Rauches 7 im oberen Bereich des Einzelbildes 4 die Geschwindigkeit der Rauchfortbewegung bestimmen, die in diesem Ausführungsbeispiel als die Geschwindigkeit $v_F$ des mittleren optischen Flusses 16 verwendet wird.

Die Turbulenzanalyseeinheit 12 vergleicht beispielsweise den herausgegriffenen Rauchbereich 15 von Figur 2a mit dem herausgegriffenen Rauchbereich 15 von Figur 2. Aufgrund der natürlichen intrinsischen Turbulenz von Rauch 7, wird sich die Verteilung der Grauwerte und/oder Farbwerte in diesem Bereich vom ersten Einzelbild 4 zum zweiten Einzelbild 4 verändert haben, was in einer niedrigen Übereinstimmung und Korrespondenz als bei einem starren Körper resultiert.

Im unteren Bereich des Rauches 7 wurde ein Konturbereich 17 ausgewählt. Der Konturbereich 17 ist ein flächiger mehr als 5 Pixel und weniger als 500 Pixel umfassender Bereich am Rand des Rauchs 7. Ein Vergleichen der Übereinstimmung des eingezeichneten Konturbereiches 17 im ersten und zweiten Einzelbild würde zu einer höheren Übereinstimmung führen als ein möglicher Konturbereich 17 im oberen Bereich des Rauchs 7. Als Maß der Übereinstimmung des bewegenden Objektes von ersten Einzelbild 4 zu einem weiteren Einzelbild 4 dient die Summe der Übereinstimmung des gesamten bewegenden Objektes von dem ersten Einzelbild 4 zum weiteren Einzelbild 4. Durch Vergleich der Korrespondenz von ersten zum zweiten Einzelbild 4 mit der Korrespondenz des ersten zu einem dritten Einzelbild 4, kann die Turbulenzanalyseeinheit 12 Rauch 7 von einem bewegenden Nichtrauchobjekt 14 unterscheiden und so ggf. einen Brand im Überwachungsbereich 3 melden.

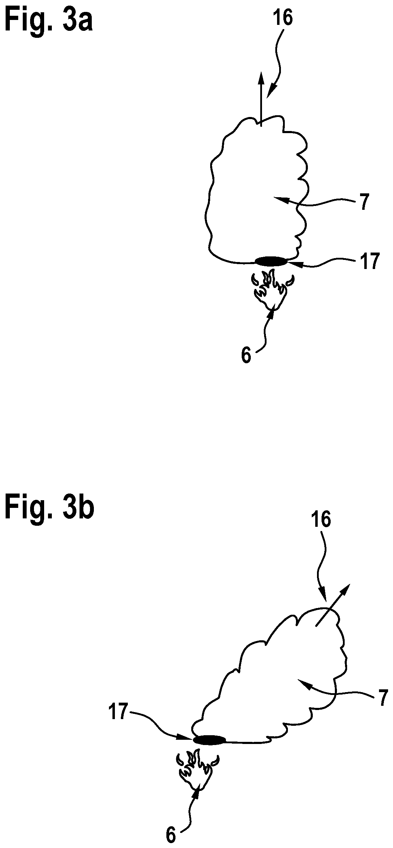

Die Figuren 3a und 3b zeigen jeweils einen Brand 6 mit darüber liegendem Rauch 7, wobei in beiden Fällen im Rauch 7 ein Konturbereich 17 ausgewählt ist. Figur 3a zeigt einen Brand 6 in einem windstillen Überwachungsbereich 3, wie zum Beispiel einer Fabrikhalle, wo der Rauch 7 in vertikale Richtung aufsteigt. Das vertikale Aufsteigen des Rauches 7 resultiert in einer Geschwindigkeit des mittleren optischen Flusses 16 in vertikale Richtung. Der Konturbereich 17 ist in Figur 3a im unteren Bereich des Rauches 7 angeordnet. Ebenso entspricht diese Anordnung des Konturbereiches 17 im unteren Bereich einer Anordnung des Konturbereichs 17 auf der der gemittelten Flussrichtung gegenüberliegenden Seite des Rauches 7.

Die Auswerteeinrichtung 9 bestimmt in diesem Fall eine Geschwindigkeit des mittleren optischen Flusses 16 in vertikale Richtung. Die Auswerteeinrichtung 9 für den unten liegenden ausgewählten Konturbereich 14 berechnet eine Geschwindigkeit von Null, da kontinuierlich Rauch 7 nachproduziert wird und so keine optischen Variationen detektierbar sind.

Die Figur 3b zeigt einen Brand 6 mit Rauchentwicklung in einem Überwachungsbereich 3 mit Wind von links kommend, so dass der Rauch 7 nach rechts oben aufsteigt. Die Geschwindigkeit des mittleren optischen Flusses 16 des bewegenden Objektes hat eine vertikale Komponente nach oben und eine horizontale Komponente nach rechts. Der Konturbereich 14 ist in diesem Ausführungsbeispiel, ebenso wie bei 2a, auf der Seite des bewegenden Objektes angeordnet, die der gemittelten optischen Flussrichtung des bewegenden Objektes entgegen liegt. Auch in diesem Beispiel würde die Auswerteeinrichtung 9 eine Geschwindigkeit $v_F$ des mittleren optischen Flusses 16 ungleich Null bestimmen, sowie eine Geschwindigkeit $v_G$ des Konturbereiches 17 von Null oder näherungsweise Null detektieren. In diesem Fall wird die Vergleichseinheit 11 das bewegende Objekt als Rauch 7 oder bewegendes Nichtrauchobjekt 14 auf Basis eines Vergleiches der Geschwindigkeit $v_F$ des mittleren optischen Flusses 16 und der Geschwindigkeit $v_G$ des Konturbereiches 17 unterscheiden können.

**Patentansprüche**

1. Rauchdetektionsvorrichtung (1) zur Detektion von Rauch (7) eines Brandes (6) in einem Überwachungsbereich (3), mit einer Kameraschnittstelle (8) zur Übernahme einer Bildfolge mit zeitlich aufeinanderfolgenden Einzelbildern von einer Überwachungskamera (2), wobei die Einzelbilder (4) den Überwachungsbereich (3) zeigen,
mit einer Auswerteeinrichtung (9) zur Bestimmung mindestens eines sich bewegenden Objektes im Überwachungsbereich (3), wobei die Auswerteeinrichtung (9) ausgebildet ist, eine Bewegung des mindestens einen sich bewegenden Objektes aus mindestens zwei Einzelbildern (4) der Bildfolge (5) zu bestimmen,
mit einer Filtereinrichtung (10) zur Unterscheidung des sich bewegenden Objektes in Rauch (7) oder ein Nichtrauchobjekt auf Basis der Bewegung des sich bewegenden Objektes
**dadurch gekennzeichnet,**
**dass** die Auswerteeinrichtung (9) eine Geschwindigkeitsmesseinheit zum Bestimmen einer Geschwindigkeit $v_F$ des mittleren optischen Flusses (16) des sich bewegenden Objektes und zum Bestimmen einer Geschwindigkeit $v_G$ eines Konturbereichs (17) des sich bewegenden Objektes umfasst,
wobei die Filtereinrichtung (10) eine Vergleichseinheit (11) umfasst,
wobei die Vergleichseinheit (11) ausgebildet ist, das sich bewegende Objekt als Rauch (7) zu detektieren wenn $v_G < v_F$ und/oder das sich bewegende Objekt als Nichtrauchobjekt zu detektieren wenn $v_G >= v_F$.

2. Rauchdetektionsvorrichtung (1) nach Anspruch 1, **dadurch gekennzeichnet, dass** die Filtereinrichtung (10) eine Vergleichseinheit (11) mit zwei Sicherheitsfaktoren $b_1$ und $b_2$ mit $0 < b_1 <= b_2 < 1$ umfasst, wobei die Vergleichseinheit (10) ausgebildet ist, das sich bewegende Objekt als Rauch (7) zu detektieren wenn $v_G < b_1 * v_F$ und/oder das sich bewegende Objekt als Nichtrauchobjekt zu detektieren wenn $v_G >= b_2 * v_F$.

3. Rauchdetektionsvorrichtung (1) nach einem der Ansprüche 1 oder 2, **dadurch gekennzeichnet, dass** der mittlere optische Fluss (16) des sich bewegenden Objekts eine gemittelte Flussrichtung aufweist, wobei der Konturbereich (17) an der der gemittelten Flussrichtung entgegen gerichteten Seite des sich bewegenden Objekt angeordnet ist.

4. Rauchdetektionsvorrichtung (1) nach einem der vorhergehenden Ansprüche, **dadurch gekennzeichnet, dass** der Überwachungsbereich (3) einen Boden umfasst, wobei der Konturbereich (17) auf der zum Boden weisenden Seite des sich bewegenden Objekts angeordnet ist.

5. Rauchdetektionsvorrichtung (1) nach einem der vorhergehenden Ansprüche, **dadurch gekennzeichnet, dass** die Filtereinrichtung (10) eine Turbulenzanalyseeinheit (12) zur Unterscheidung des sich bewegenden Objektes in Rauch (7) und Nichtrauchobjekt auf Basis von Turbulenzen im sich bewegenden Objekt umfasst.

6. Rauchdetektionsvorrichtung (1) nach Anspruch 5, **dadurch gekennzeichnet, dass** die Auswerteeinrichtung (9) ausgebildet ist, eine erste Korrespondenz $R_1$ des sich bewegenden Objektes als ein Vergleichs- und/oder Übereinstimmungsmaß von mindestens einem ersten Bildbereich in einem ersten und einem zweiten Einzelbild (4) zu bestimmen, wobei die zwei Einzelbilder (4) einen zeitlichen Abstand dt aufweisen, und die Auswerteeinrichtung (9) ausgebildet ist, mindestens eine zweite Korrespondenz $R_2$ des sich bewegenden Objektes als ein Vergleichs- und/oder Übereinstimmungsmaß des ersten Bildbereiches in dem ersten und einem dritten Einzelbild (4) zu bestimmen, wobei das erste Einzelbild (4) und das dritte Einzelbild (4) einen zeitlichen Abstand von n*dt aufweisen, wobei die Turbulenzanalyseeinheit (12) zwei Faktoren $c_1$ und $c_2$ mit $0 < c_1 <= c_2 < 1$ umfasst und ausgebildet ist, das sich bewegende Objekt als Rauch (7) zu detektieren wenn $R_2 < c_1 * R_1$ und das sich bewegende Objekt als Nichtrauchobjekt zu detektieren wenn $R_2 >= c_2 * R_1$.

7. Rauchdetektionsvorrichtung (1) nach Anspruch 6, **dadurch gekennzeichnet, dass** die Auswerteeinrichtung (9) ausgebildet ist, die erste Korrespondenz $R_1$ und zweite Korrespondenz $R_2$ mit einer region of interest (ROI) auf eine relative erste Korrespondenz $\tilde{R}_1$ und eine relative zweite Korrespondenz $\tilde{R}_2$ zu normieren und die Turbulenzanalyseeinheit (12) zwei Faktoren $d_1$ und $d_2$ mit $0 < d_1 <= d_2 < 1$ umfasst und ausgebildet ist, das sich bewegende Objekt als Rauch (7) zu detektieren wenn $\tilde{R}_2 < d_1 * \tilde{R}_1$ und das sich bewegende Objekt als Nichtrauchobjekt zu detektieren wenn $\tilde{R}_2 >= d_2 * \tilde{R}_1$.

8. Verfahren mit einer Rauchdetektionsvorrichtung (1), insbesondere nach einem der vorhergehenden Ansprüche, wobei mit einer Auswerteeinrichtung (9) auf Basis mindestens zweier Einzelbilder (4) einer Bilderserie eines Überwachungsbereiches (3) die Bewegung eines sich bewegenden Objektes im Überwachungsbereich (3) bestimmt wird und mit einer Filtereinrichtung (10) das sich bewegende Objekt in Rauch (7) und Nichtrauchobjekt auf Basis der Bewegung des sich bewegenden Objektes bestimmt wird, wobei mit der Auswerteeinrichtung (9) eine Geschwindigkeit $v_F$ des mittleren optischen Flusses (16) des sich bewegenden Objektes und eine Geschwindigkeit $v_G$ eines Konturbereichs (17) des sich bewegenden Objektes bestimmt wird, wobei mit einer Vergleichseinheit das sich bewegende Objekt dann als Rauch (7) detektiert wird, wenn $v_G < v_F$ ist und/oder das sich bewegende Objekt dann als Nichtrauchobjekt detektiert wird, wenn $v_G >= v_F$ ist.

9. Computerprogramm mit Programmcode-Mitteln, um alle Schritte des Verfahrens nach Anspruch 8 durchzuführen, wenn das Programm auf einem Computer und/oder auf der Rauchdetektionsvorrichtung (1) von jedem Beliebigen der Ansprüche 1 bis 7 ausgeführt wird.

**Claims**

1. Smoke detection device (1) for detecting smoke (7) from a fire (6) in a monitoring area (3),
having a camera interface (8) for accepting an image sequence having temporally successive individual images from a monitoring camera (2), wherein the individual images (4) show the monitoring area (3),
having an evaluation device (9) for determining at least one moving object in the monitoring area (3), wherein the evaluation device (9) is designed to determine a movement of the at least one moving object from at least two individual images (4) in the image sequence (5),
having a filter device (10) for distinguishing the moving object as smoke (7) or a non-smoke object on the basis of the movement of the moving object,
**characterized**
**in that** the evaluation device (9) comprises a speed measuring unit for determining a speed $v_F$ of the average optical flow (16) of the moving object and for determining a speed $v_G$ of a contour area (17) of the moving object, wherein the filter device (10) comprises a comparison unit (11), wherein the comparison unit (11) is designed to detect the moving object as smoke (7) if $v_G < v_F$ and/or to detect the moving object as a non-smoke object if $v_G >= v_F$.

2. Smoke detection device (1) according to Claim 1, **characterized in that** the filter device (10) comprises a comparison unit (11) having two safety factors $b_1$ and $b_2$ with $0 < b_1 <= b_2 < 1$, wherein the comparison unit (10) is designed to detect the moving object as smoke (7) if $v_G < b_1*v_F$ and/or to detect the moving object as a non-smoke object if $v_G >= b_2*v_F$.

3. Smoke detection device (1) according to either of Claims 1 and 2, **characterized in that** the average optical flow (16) of the moving object has an averaged flow direction, wherein the contour area (17) is arranged on that side of the moving object which is contrary to the averaged flow direction.

4. Smoke detection device (1) according to one of the preceding claims, **characterized in that** the monitoring area (3) comprises a base, wherein the contour area (17) is arranged on that side of the moving object which faces the base.

5. Smoke detection device (1) according to one of the preceding claims, **characterized in that** the filter device (10) comprises a turbulence analysis unit (12) for distinguishing the moving object as smoke (7) and a non-smoke object on the basis of turbulence in the moving object.

6. Smoke detection device (1) according to Claim 5, **characterized in that** the evaluation device (9) is designed to determine a first correspondence $R_1$ of the moving object as a degree of comparison and/or accordance of at least one first image area in a first individual image and in a second individual image (4), wherein the two individual images (4) have a temporal spacing dt, and the evaluation device (9) is designed to determine at least a second correspondence $R_2$ of the moving object as a degree of comparison and/or accordance of the first image area in the first individual image and in a third individual image (4), wherein the first individual image (4) and the third individual image (4) have a temporal spacing of n*dt, wherein the turbulence analysis unit (12) comprises two factors $c_1$ and $c_2$ with $0 < c_1 <= c_2 < 1$ and is designed to detect the moving object as smoke (7) if $R_2 < c_1*R_1$ and to detect the moving object as a non-smoke object if $R_2 >= c_2*R_1$.

7. Smoke detection device (1) according to Claim 6, **characterized in that** the evaluation device (9) is designed to normalize the first correspondence $R_1$ and the second correspondence $R_2$ with a region of interest (ROI) to a relative first correspondence $\tilde{R}_1$ and a relative second correspondence $\tilde{R}_2$, and the turbulence analysis unit (12) comprises two factors $d_1$ and $d_2$ with $0 < d_1 <= d_2 < 1$ and is designed to detect the moving object as smoke (7) if $\tilde{R}_2 < d_1*\tilde{R}_1$ and to detect the moving object as a non-smoke object if $\tilde{R}_2 >= d_2*\tilde{R}_1$.

8. Method using a smoke detection device (1), in particular according to one of the preceding claims, wherein an evaluation device (9) determines the movement of a moving object in a monitoring area (3) on the basis of at least two individual images (4) in an image series of a monitoring area (3), and a filter device (10) determines the moving object as smoke (7) and a non-smoke object on the basis of the movement of the moving object, wherein the evaluation device (9) is used to determine a speed $v_F$ of the average optical flow (16) of the moving object and a speed $v_G$ of a contour area (17) of the moving object, wherein a comparison unit is used to detect the moving object as smoke when $v_G < v_F$ and/or to detect the moving object as a non-smoke object when $v_G > = v_F$.

9. Computer program having program code means for carrying out all steps of the method according to Claim 8 when the program is executed on a computer and/or on the smoke detection device (1) according to any one of Claims 1 to 7.


**Revendications**

1. Dispositif de détection de fumée (1) pour la détection de fumée (7) d'un incendie (6) dans une zone de surveillance (3), comportant
une interface de caméra (8) pour l'enregistrement d'une succession d'images comportant des images individuelles successives d'une caméra de surveillance (2), les images individuelles (4) montrant la zone de surveillance (3),

une unité d'exploitation (9) pour la détermination d'au moins un objet se déplaçant dans la zone de surveillance (3), l'unité d'exploitation (9) étant conçue pour déterminer un mouvement de l'au moins un objet se déplaçant à partir d'au moins deux images individuelles (4) de la succession d'images (5),
un dispositif de filtrage (10) pour différencier l'objet se déplaçant comme étant de la fumée (7) ou un objet comme n'étant pas de la fumée sur la base du mouvement de l'objet se déplaçant,
**caractérisé en ce que**
le dispositif d'exploitation (9) comprend une unité de mesure de vitesse pour la détermination d'une vitesse $v_F$ du flux optique moyen (16) de l'objet se déplaçant et pour la détermination d'une vitesse $v_G$ d'une zone de contour (17) de l'objet se déplaçant,
le dispositif de filtrage (10) comprenant une unité de comparaison (11),
l'unité de comparaison (11) étant conçue pour détecter l'objet se déplaçant comme étant de la fumée (7) si $v_G < v_F$ et/ou l'objet se déplaçant comme n'étant pas de la fumée si $v_G >= v_F$.

2. Dispositif de détection de fumée (1) selon la revendication 1, **caractérisé en ce que** le dispositif de filtrage (10) comprend une unité de comparaison (11) avec deux facteurs de sécurité $b_1$ et $b_2$, sachant que $0 < b_1 <= b_2 < 1$, l'unité de comparaison (10) étant conçue pour détecter l'objet se déplaçant comme étant de la fumée (7) si $v_G < b_1*v_F$ et/ou l'objet se déplaçant comme n'étant pas de la fumée si $v_G >= b_2*v_F$.

3. Dispositif de détection de fumée (1) selon une des revendications 1 ou 2, **caractérisé en ce que** le flux optique moyen (16) de l'objet se déplaçant présente un sens de flux moyen, la zone de contour (17) étant disposée sur le côté détourné du sens de flux moyen de l'objet se déplaçant.

4. Dispositif de détection de fumée (1) selon une des revendications précédentes, **caractérisé en ce que** la zone de surveillance (3) comprend un fond, la zone de contour (17) étant disposée sur le côté tourné vers le fond de l'objet se déplaçant.

5. Dispositif de détection de fumée (1) selon une des revendications précédentes, **caractérisé en ce que** le dispositif de filtrage (10) comprend une unité d'analyse de turbulences (12) pour différencier l'objet se déplaçant en fumée (7) et en objet n'étant pas de la fumée sur la base des turbulences dans l'objet se déplaçant.

6. Dispositif de détection de fumée (1) selon la revendication 5, **caractérisé en ce que** l'unité d'exploitation (9) est conçue pour déterminer une première correspondance $R_1$ de l'objet se déplaçant sous forme d'une dimension de comparaison et/ou de concordance d'au moins une première zone d'image dans une première et une deuxième image individuelle (4), les deux images individuelles (4) présentant un intervalle temporel dt, et l'unité d'exploitation (9) étant conçue pour déterminer au moins une seconde correspondance $R_2$ de l'objet se déplaçant sous forme d'une dimension de comparaison et/ou de concordance de la première zone d'image dans la première et dans une troisième image individuelle (4), la première image individuelle (4) et la troisième image individuelle (4) présentant un intervalle temporel de n*dt, l'unité d'analyse de turbulences (12) comprenant deux facteurs $c_1$ et $c_2$, sachant que $0 < c_1 <= c_2 < 1$ et étant conçue pour détecter l'objet se déplaçant comme étant de la fumée (7) si $R_2 < c_1*R_1$ et l'objet se déplaçant comme n'étant pas de la fumée si $R_2 >= c_2*R_1$.

7. Dispositif de détection de fumée (1) selon la revendication 6, **caractérisé en ce que** l'unité de pression (9) est conçue pour normaliser la première correspondance $R_1$ et la seconde correspondance $R_2$ avec une zone d'intérêt (ROI) à une première correspondance relative $\acute{R}_1$ et une seconde correspondance relative $\acute{R}_2$ et que l'unité d'analyse de turbulences (12) comprend deux facteurs $d_1$ et $d_2$, sachant que $0 < d_1 <= d_2 < 1$ et est conçue pour détecter l'objet se déplaçant comme étant de la fumée (7) si $\acute{R}_2 < d_1*\acute{R}_1$ et l'objet se déplaçant comme n'étant pas de la fumée si $\acute{R}_2 >= d_2*\acute{R}_1$.

8. Procédé comportant un dispositif de détection de fumée (1), en particulier selon une des revendications précédentes, dans lequel, à l'aide d'un dispositif d'exploitation (9), sur la base d'au moins deux images individuelles (4) d'une série d'images d'une zone de surveillance (3), le mouvement d'un objet se déplaçant dans la zone de surveillance (3) est déterminé et, à l'aide d'un dispositif de filtrage (10), l'objet se déplaçant est déterminé comme étant de la fumée (7) et n'étant pas de la fumée sur la base du mouvement de l'objet se déplaçant, à l'aide de l'unité d'exploitation (9), une vitesse $v_F$ du flux optique moyen (16) de l'objet se déplaçant et une vitesse $v_G$ d'une zone de contour (17) de l'objet se déplaçant sont déterminées, à l'aide d'une unité de comparaison, l'objet se déplaçant étant ensuite détecté comme étant de la fumée (7) si $v_G < v_F$ et/ou l'objet se déplaçant étant ensuite déterminé comme n'étant pas de la fumée si $v_G >= v_F$.

9. Programme informatique comportant des moyens de codage de programme pour réaliser toutes les étapes du procédé selon la revendication 8 lorsque le programme est exécuté sur un ordinateur et/ou sur le dispositif de détection de fumée (1) de l'une quelconque des revendications 1 à 7.

# Fig. 1

# Fig. 2a

# Fig. 2b

## Fig. 3a

## Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008037293 A
- DE 102014219829 A1
- DE 19840873 A1
- US 20130279803 A1
- WO 0157819 A2